(19) Europäisches Patentamt
European Patent Office
Office européen des brevets

(11) **EP 0 690 592 B1**

(12) **FASCICULE DE BREVET EUROPEEN**

(45) Date de publication et mention
de la délivrance du brevet:
**27.08.2003 Bulletin 2003/35**

(51) Int Cl.7: **H04B 10/207**, H04J 14/02,
H04Q 11/00

(21) Numéro de dépôt: **95401524.4**

(22) Date de dépôt: **27.06.1995**

(54) **Système d'interconnexion optique**

Optisches Verbindungssystem

Optical interconnection system

(84) Etats contractants désignés:
**BE DE FR GB IT NL**

(30) Priorité: **01.07.1994 FR 9408157**

(43) Date de publication de la demande:
**03.01.1996 Bulletin 1996/01**

(73) Titulaire: **Thales**
**75008 Paris (FR)**

(72) Inventeurs:
• **Lagoutte, Pierre**
**F-92402 Courbevoie Cedex (FR)**
• **D'Auria, Luigi**
**F-92402 Courbevoie Cedex (FR)**

(56) Documents cités:
**EP-A- 0 496 674    WO-A-86/05649**

• **JOURNAL OF LIGHTWAVE TECHNOLOGY., vol. 11, no. 5/6, Mai 1993 NEW YORK US, pages 1088-1093, H.TOBA ET AL 'A Demand-Assign Optical Frequency-Division-Multiple-Access Star Network'**
• **IEEE GLOBAL COMMUNICATIONS CONFERENCE GLOBECOM '93, vol. 2, 29 Novembre 1993 HOUSTON,TEXAS,US, pages 1169-1175, G.I.PAPADIMITRIOU ET AL 'Learning Automata - Based Random Access Protocols for WDM Passive Star Networks'**

## Description

L'invention concerne un système d'interconnexion optique applicable notamment à l'interconnexion de plusieurs cartes de circuits électroniques pour leur permettre de communiquer entre elles.

L'échange d'informations sous forme optique entre cartes électroniques est intéressant en raison de la rapidité de transmission qui augmente le débit et qui enlève toutes contraintes dans les distances entre cartes et en raison de l'immunité aux parasites. Une demande de brevet WO-A-8605649 divulgue un réseau de communications optiques, notamment pour des applications locales. Une demande de brevet EP-A-0496674 divulgue un réseau de communications à allocations de fréquences.

Les liaisons des télécommunications en zone de campus est principalement desservi par des Unités de Raccordement d'Abonné spécialisées, appelées "hubs", localisées dans les locaux techniques des sites à raccorder. Ces hubs interconnectent des abonnés, actuellement principalement à 10 Mbits/s, par grappes de 10 à 100 (1 à 16 cartes de 8 à 16 abonnés ou plus). Les technologies d'accès se renouvelant, le débit binaire à servir aux usages a tendance à s'accroître (propositions de 25, 50, 100 Mbits/s). Cette situation a pour effet de susciter un besoin d'échange global, en fond de panier des hubs, qui évolue de 300/500 Mbits/s (situation actuelle) à 2/10 Gbits/s (situation 95). Les échanges induits s'effectuent de manière peu prédictible entre les cartes du hub (d'implémentation banalisée) ; chaque carte pouvant générer jusqu'à 500/1000 Mbits/s en débit crête, et les échanges pouvant être "multicast", c'est-à-dire vers plusieurs cartes réceptrices simultanément. Les implémentations actuelles (jusqu'à 4 Gbits/s) privilégient des solutions "tout électriques" sur bus 1 vers N, chaque carte étant seule à émettre sur une partie du bus (de manière statique), et toutes les autres étant en écoute. La technologie électrique permet d'écouler de 20 à 50 Mbits/s par point de connecteur, avec des problèmes d'impédance caractéristique de fond de panier devenant ardus avec le débit ; elle nécessite en pratique des connecteurs millimétriques à haute densité de plusieurs centaines de points, et une surface de cuivre importante pour l'implémentation des drivers/récepteurs de ligne.

Techniquement, le besoin d'interconnexion attend une rénovation de ces solutions, sous forme d'une architecture optique de transmission en fond de panier permettant d'interconnecter 16 cartes, chacune pouvant émettre jusqu'à 1 Gbits/s vers une ou plusieurs autres à un instant donné.

L'invention concerne donc un système d'interconnexion optique comprenant :

- un nombre déterminé de circuits à interconnecter, chaque circuit comprenant un émetteur optique et au moins un récepteur optique, l'émetteur d'une carte émettant à une longueur d'onde optique propre à ce circuit ;
- un coupleur optique connectant l'émetteur de chaque circuit à tous les récepteurs des autres circuits.

Chaque circuit possède une information d'adresse qui l'identifie, la valeur de cette information d'adresse étant appliquée à l'émetteur de la carte pour régler la longueur d'onde optique d'émission de l'émetteur.

Il est essentiel que la solution de l'invention préserve la banalisation des cartes en terme de fixité des emplacements physiques des émetteurs et récepteurs en fond de panier. Chaque carte est à même d'acquérir, si nécessaire, son numéro d'emplacement par lecture électrique du fond de panier.

C'est pourquoi l'invention concerne également un système dans lequel chaque circuit à interconnecter est réalisé sur une carte, les différentes cartes étant enfichées dans au moins un connecteur, l'information d'adresse d'un circuit lui étant fournie par ce connecteur.

L'invention prévoit une banalisation des cartes en ce qui concerne leur conception et la position des différents éléments sur les cartes.

C'est pourquoi l'invention concerne également un système comportant dans chaque circuit déterminé :

- autant de récepteurs qu'il y a de circuits, chaque récepteur étant efficace pour la longueur d'onde d'émission d'un seul circuit et fournissant un courant à la réception de cette longueur d'onde ;
- un commutateur connectant sous la commande de l'information d'adresse, le récepteur qui est efficace à la longueur d'onde émise par l'émetteur du même circuit déterminé, à un détecteur de courant électrique, lequel commande un circuit de réglage de longueur d'onde d'émission de l'émetteur tant que celui-ci n'émet pas à une longueur d'onde appropriée.

Les différents objets et caractéristiques de l'invention apparaîtront plus clairement dans la description qui va suivre et dans les figures annexées qui représentent :

- la figure 1, un exemple de réalisation général du système de l'invention ;
- la figure 2, un exemple de réalisation détaillé du système de l'invention.

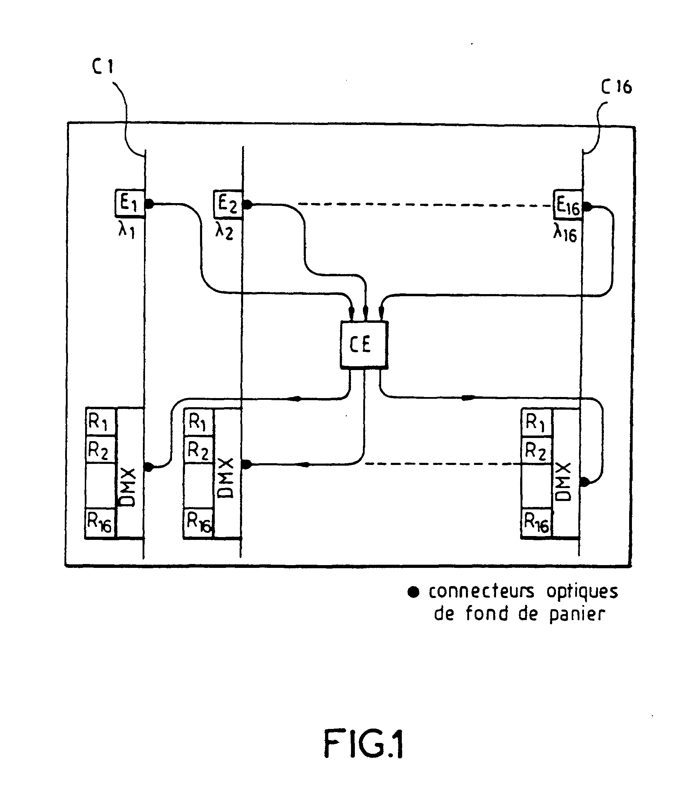

En se reportant à la figure 1, on va tout d'abord décrire un exemple de réalisation simplifié du système d'interconnexion selon l'invention.

Le but recherché est l'interconnexion de N cartes, toutes les cartes étant susceptibles d'échanger des informations entre elles simultanément. L'architecture classique d'interconnexion consiste à disposer un émetteur et N récepteurs sur chacune des N cartes et de relier chaque émetteur par N liaisons aux N récepteurs de rang correspondant sur chacune des cartes. Le nombre de liaisons est donc égal à $N^2$, soit 256 pour 16 cartes. Selon l'invention on réduit ce nombre de liaisons à 2N.

L'architecture de l'invention est représentée sur la figure 1. On suppose dans cet exemple qu'on a N = 16 cartes. Chaque carte C1 à C16 comprend un émetteur tel que E1 pour la carte C1 et E16 pour la carte C16, N récepteurs et un démultiplexeur optique DMX1 à DMX16. Les émetteurs E1 à E16 ont des longueurs d'onde d'émission différentes correspondant aux valeurs des filtres constituant les démultiplexeurs optiques. Les 16 émetteurs E1 à E16 sont connectés par 16 fibres optiques aux 16 entrées d'un coupleur étoile CE comportant 16 entrées et 16 sorties. Ce coupleur joue ici le rôle de multiplexeur et de distributeur optiques ; chacune des 16 fibres de sortie aboutissant aux démultiplexeurs situés sur chacune des cartes, véhicule simultanément les signaux modulant les émetteurs optiques, portés par les 16 différentes longueurs d'onde.

Le coupleur CE est réalisé de façon connue dans la technique. On trouvera un exemple de réalisation d'un tel coupleur dans le document : "Efficient Multi-channel Integrated Optics Star Coupler on Silicon" de C. Dragone et al publié dans IEEE Photonics Technology letters, vol 1, n° 8, Août 1989, pp. 241-243.

Les démultiplexeurs DMX1 à DMX16 de chaque carte séparent alors spatialement les 16 longueurs d'onde $\lambda i$ et les dirigent vers 16 récepteurs qui délivrent à leur tour, en parallèle, les 16 signaux émis par les émetteurs optiques.

Le nombre de liaisons est dans ce cas réduit à 2N, soit 32 pour 16 cartes, chaque carte ne comportant que 2 connecteurs optiques.

Toutes les cartes contiennent des composants et sous-ensembles identiques disposés aux mêmes endroits. Seules les longueurs d'ondes émises par les émetteurs optiques diffèrent d'une carte à l'autre.

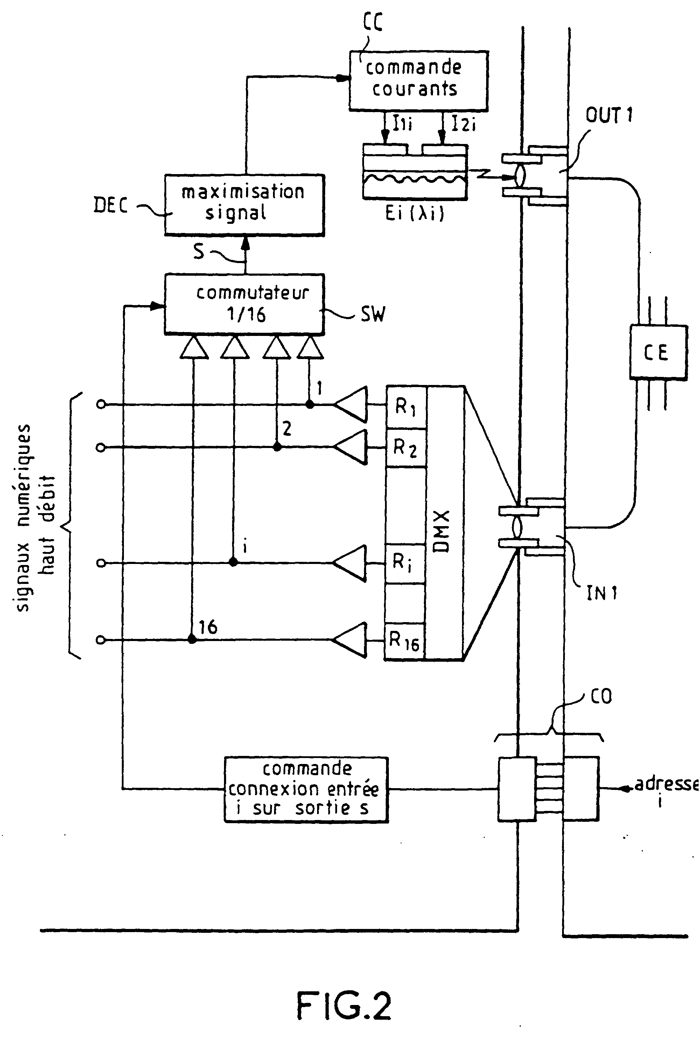

Selon l'invention, on prévoit de banaliser les cartes C1 à C16 en faisant appel pour les émetteurs à des diodes laser électriquement accordables dont la longueur d'onde sera automatiquement réglée à la valeur correspondant au rang de la carte lors de l'enfichage de celle-ci dans le fond de panier. Pour ce faire on propose le dispositif représenté sur la figure 2.

L'adresse i est fonction d'un paramètre connu tel que la position de la carte. Par exemple, l'adresse i de la carte est fournie à celle-ci par le fond de panier via un connecteur électrique CO. Cette adresse va commander un commutateur électrique SW à N entrées et une sortie c'est-à-dire, sur la figure 2, à 16 entrées et une sortie. Chaque entrée est susceptible de recevoir le niveau moyen délivré par chaque récepteur R1 à R16 obtenu après démodulation dans DMX, amplification et intégration des signaux optiques détectés. L'adresse i envoyée au commutateur SW connecte la sortie S au récepteur de rang i, Ri. Le niveau moyen fourni par Ri disponible en S, commande alors un circuit détecteur électronique DEC agissant sur un circuit de réglage CC lequel commande les courants I1i et I2i injectés dans la diode laser Ei de façon à maximiser la puissance optique émise par celle-ci.

Un émetteur tel que Ei peut être réalisé comme cela est décrit dans le document "Frequency Tunable Semiconductors Laser" de S. Murata et al publié dans Optical and Quantum Electronics, 22, (1990), pp. 1-15. Dans un tel émetteur, il est prévu de régler la longueur d'onde d'émission en agissant sur la valeur du ou des courants de commande.

Un démultiplexeur DMX peut être réalisé comme cela est décrit dans le document : "Practical Realization of a High Density Diode-Coupled Wavelength Demultiplexer" de G.J. Cannell, publié dans IEEE Journal on Selected Areas in Communications, vol 8, n° 6, Août 1990, pp. 1141-1145.

Un tel démultiplexeur est capable de recevoir sur une seule entrée (connecteur optique IN1 sur la figure 2) plusieurs longueurs d'ondes. Il défléchit les différentes longueurs d'ondes selon des directions différentes de telle façon qu'une onde provenant de la carte C1 soit déviée vers le récepteur R1, une onde provenant de la carte C2 soit déviée vers le récepteur R2, ... une onde provenant de la carte C16 soit déviée vers le récepteur R16.

Dans cet exemple de réalisation, on suppose que les récepteurs R1 à R16 de chaque carte sont numérotés de la même façon que les cartes. De cette façon, les récepteurs R1 des différentes cartes sont capables de recevoir l'onde optique émise par l'émetteur de la carte C1, etc.

Dans ces conditions, le fonctionnement du système est le suivant :

Les différentes cartes (C1 à C16) sont enfichées dans leur connecteur tel que CO sur la figure 2. Le connecteur C0 fournit une information d'adresse, soit que cette information est contenue dans le connecteur CO soit qu'elle provient d'un dispositif distant non représenté. Cette information d'adresse est fournie à un commutateur SW. Celui-ci est mis dans une position correspondant à cette information et connecte le récepteur de même rang à la sortie S.

Par exemple, pour la carte C1, le commutateur SW est mis en position 1 et connecte le récepteur R1 à la sortie S.

Lorsque l'émetteur d'une carte doit émettre des informations le fonctionnement est le suivant.

Par exemple lorsque l'émetteur E1 de la carte C1 doit émettre, le signal optique qu'il émet (par le connecteur optique OUT1) est envoyé aux démultiplexeurs de toutes les cartes C1 à C16. En particulier, il est transmis au démultiplexeur DMX1 de sa propre carte C1. On rappelle que dans cette carte C1, le récepteur R1 est connecté à la sortie S par le commutateur SW.

Si on suppose que l'onde optique émise par l'émetteur E1 n'est pas à la longueur d'onde normalement attribuée à l'émetteur E1, le récepteur R1 ne détecte pas cette onde. Le détecteur DEC ne détecte donc pas de courant sur la sortie S provenant du récepteur R1. Le détecteur DEC commande alors le circuit de réglage CC qui fait varier le ou les courants de commande I1i et I2i de la diode laser Ei de l'émetteur. Lorsque l'émetteur Ei émet la longueur d'onde appropriée et à un niveau de puissance suffisant, le récepteur R1 de la carte C1 la détecte (tout comme les récepteurs R1 des autres cartes). Le récepteur R1 fournit un signal suffisant au commutateur SW et donc au détecteur DEC. Celui-ci détecte le signal et fournit un signal de commande au circuit de réglage CC pour que celui-ci conserve le réglage qui vient d'être obtenu. Pour permettre à l'émetteur de chaque carte de se régler sur la bonne longueur d'onde d'émission, on dispose ainsi d'une boucle de contre réaction optoélectronique passant à travers le coupleur étoile CE par l'émetteur Ei et le récepteur Ri associé à son filtre (démultiplexeur optique) qui a le double avantage :

- d'ajuster la longueur d'onde de l'émetteur laser à la valeur correspondant au rang de la carte,
- de maintenir la puissance optique émise au niveau maximum de consigne.

Selon un exemple de réalisation on dispose de 16 cartes à interconnecter.

Il prévoit donc 16 diodes laser multiélectrodes accordables dont les longueurs d'onde par exemple sont asservies de façon à être séparées de 0.5 nm émettant dans un spectre de 8 nm dans la fenêtre 1500 nm (ou 1300 nm) de transmission des fibres optiques. Ces diodes laser sont modulables jusqu'à un débit de 1 Gbits/s et émettent des puissances optiques moyennes de l'ordre de + 3 dBm dont au moins la moitié est couplée dans chaque fibre optique monomode aboutissant au coupleur étoile CE.

Pour le coupleur étoile CE, on préférera pour une question d'encombrement une version optique intégrée à 16 entrées et 16 sorties telle que celle décrite dans le document C. Dragone cité précédemment mais il serait possible de prévoir tout autre type de coupleur.

La perte d'insertion de tels coupleurs planar est inférieure à 3 dB, l'uniformité de répartition est de l'ordre de 1 dB, la perte de distribution pour 16 voies correspondant à 12 dB.

Pour le démultiplexeur, on adoptera le dispositif décrit dans le document G.J. Cannel cité précédemment, qui rassemble dans un même boîtier "dual in line" à une entrée par fibre optique, un démultiplexeur optique conçu à partir d'un réseau et une barrette monolithique de 16 photodiodes GaInAs/InP assemblés sous forme opto-hybride. La dispersion du réseau sera adaptée à une résolution de 0.5 nm. La sensibilité de ce dispositif peut être meilleure que -25 dBm pour un débit de 1 Gbits/s et un taux d'erreurs de $10^{-9}$.

Un système conçu à l'aide de tels composants présente les performances suivantes :

| | |
|---|---|
| Puissance optique émise par un émetteur Ei | + 3 dBm |
| Perte de couplage émetteur/fibre | - 3 dB |
| Perte de connexion optique de fond de panier | - 1 dB |
| Perte d'insertion de CE | - 3 dB |
| Répartition de CE | - 12 dB |
| Perte de connexion optique de fond de panier | - 1 dB |
| Puissance optique par canal reçu par le démultiplexeur / récepteur | - 17 dBm |
| Sensibilité par canal du démultiplexeur/récepteur | - 25 dBm |
| Marge | + 8 dB |

Cette marge peut être utilisée si besoin est à la fois pour diminuer le taux d'erreur et simplifier l'étage de préamplification.

L'invention concerne l'interconnexion optique de cartes dans un équipement. Afin de réduire le nombre de liaisons entre cartes, on adopte le principe du coupleur étoile et du multiplexage optique, chaque carte étant munie d'une source optique émettant une longueur d'onde distincte. La banalisation des cartes est réalisée par le réglage automatique de cette longueur d'onde à la valeur correspondant au rang i de la carte, grâce à une boucle d'asservissement maximisant la puissance optique émise à partir du signal électrique délivré par la photodiode associée au filtre de rang i du démultiplexeur optique. La connexion de cette photodiode et de l'émetteur est effectuée par l'allocation du rang de la carte lors de l'enfichage de celle-ci.

Ce même système peut être appliqué à des terminaux éloignés reliés par un réseau optique étoilé multiplexé en longueur d'onde.

**Revendications**

1. Système d'interconnexion optique comprenant :

   - un nombre déterminé (N) de circuits (C1 à C16) à interconnecter, chaque circuit étant réalisé sur une carte et comprenant un émetteur optique (E1 à E16) et au moins un récepteur optique (R1, R16), l'émetteur d'une carte émettant à une longueur d'onde optique propre à ce circuit ;
   - un coupleur optique (CE) connectant l'émetteur de chaque circuit à tous les récepteurs des autres circuits ;

   **caractérisé en ce que** chaque carte (C1 à C16) possède une information d'adresse qui l'identifie, la valeur de cette information d'adresse étant appliquée à l'émetteur de la carte pour régler la longueur d'onde optique d'émission de l'émetteur, l'information d'adresse étant fournie à une carte (C1 à C16) par un dispositif extérieur à cette carte en fonction du rang de cette carte dans l'ensemble de circuits à interconnecter.

2. Système selon la revendication 1, **caractérisé en ce que** chaque circuit à interconnecter est réalisé sur une carte, chaque carte étant enfichée dans au moins un connecteur (CO), l'information d'adresse d'un circuit lui étant fournie par ce connecteur.

3. Système selon la revendication 2, **caractérisé en ce que** l'information d'adresse est contenue dans ce connecteur.

4. Système selon la revendication 2, **caractérisé en ce que** le connecteur est câblé de façon à adapter une information d'adresse fournie par un circuit extérieur, à la carte qui lui est connectée.

5. Système selon la revendication 1, **caractérisé en ce qu'**il comporte dans chaque circuit déterminé (C1 par exemple) :

   - autant de récepteurs (R1, R16) qu'il y a de circuits, chaque récepteur étant efficace pour la longueur d'onde d'émission d'un seul circuit et fournissant un courant à la réception de cette longueur d'onde ;
   - un commutateur (SW) connectant sous la commande de l'information d'adresse, le récepteur (R1) qui est efficace à la longueur d'onde émise par l'émetteur (E1) du même circuit déterminé (C1 selon l'exemple pris), à un détecteur (DEC) de courant électrique, lequel commande un circuit de réglage (CC) de longueur d'onde d'émission de l'émetteur tant que celui-ci n'émet pas à une longueur d'onde appropriée.

6. Système selon la revendication 5, **caractérisé en ce que** le détecteur (DEC) émet un signal particulier de commande vers le circuit de réglage (CC) tant qu'il ne reçoit pas un signal de niveau suffisant de l'émetteur (E1).

7. Système selon la revendication 5, **caractérisé en ce que** chaque circuit comporte un commutateur possédant une sortie et autant d'entrées qu'il y a de récepteurs et permettant de connecter une entrée à une sortie vers le détecteur (DEC).

8. Système selon l'une des revendications 1 ou 7, **caractérisé en ce qu'**il comporte un démultiplexeur (DMX) en longueurs d'ondes connecté au coupleur (CE), recevant les différentes longueurs d'ondes émises par les émetteurs des différents circuits (C1 à C16) et aiguillant chaque longueur d'onde vers un récepteur (R1 à R16) particulier.

9. Système selon l'une des revendications 7 ou 8, **caractérisé en ce que** chaque circuit (C1 à C16) est réalisé sur une carte, les différentes cartes étant enfichées dans un connecteur (CO) lequel fournit l'information d'adresse au circuit et **en ce que** le connecteur (CO), le démultiplexeur (DMX), les récepteurs (R1 à R16), le commutateur (SW), le détecteur (DEC), le circuit de réglage (CC), l'émetteur (Ei) occupent des emplacements identiques sur différentes cartes.

**Patentansprüche**

1. System für eine optische Verbindung, das umfaßt:

   - eine bestimmte Anzahl (N) von zu verbindenden Schaltungen (C1 bis C16), wovon jede auf einer Karte verwirklicht ist und einen optischen Sender (E1 bis E16) und wenigstens einen optischen Empfänger (R1, R16) umfaßt, wobei der Sender einer Karte mit einer dieser Schaltung eigentümlichen Lichtwellenlänge sendet;

- einen optischen Koppler (CE), der den Sender jeder Schaltung mit allen Empfängern der anderen Schaltungen verbindet;

**dadurch gekennzeichnet, daß** jede Karte (C1 bis C16) eine Adresseninformation besitzt, die sie identifiziert, wobei der Wert dieser Adresseninformation in den Sender der Karte eingegeben wird, um die Sendelichtwellenlänge des Senders einzustellen, wobei die Adresseninformation an eine Karte (C1 bis C16) von einer Vorrichtung außerhalb dieser Karte in Abhängigkeit vom Rang dieser Karte in der Gesamtheit der zu verbindenden Schaltungen geliefert wird.

2. System nach Anspruch 1, **dadurch gekennzeichnet, daß** jede zu verbindende Schaltung auf einer Karte verwirklicht ist, wobei jede Karte in wenigstens einen Verbinder (CO) gesteckt ist, wobei die Adresseninformation einer Schaltung von diesem Verbinder an sie geliefert wird.

3. System nach Anspruch 2, **dadurch gekennzeichnet, daß** die Adresseninformation in diesem Verbinder enthalten ist.

4. System nach Anspruch 2, **dadurch gekennzeichnet, daß** der Verbinder in der Weise verdrahtet ist, daß er eine von einer äußeren Schaltung gelieferte Adresseninformation an die Karte, die mit ihm verbunden ist, anpaßt.

5. System nach Anspruch 1, **dadurch gekennzeichnet, daß** es in jeder bestimmten Schaltung (z. B. C1) enthält:

- so viele Empfänger (R1, R16), wie Schaltungen vorhanden sind, wobei jeder Empfänger bei der Sendewellenlänge einer einzigen Schaltung arbeitet und bei Empfang dieser Wellenlänge einen Strom liefert;

- einen Umschalter (SW), der unter der Steuerung der Adresseninformation den Empfänger (R1), der bei der Wellenlänge arbeitet, die von dem Sender (E1) dieser bestimmten Schaltung (C1 in dem betrachteten Beispiel) gesendet wird, mit einem Detektor (DEC) für elektrischen Strom verbindet, der seinerseits eine Schaltung (CC) für die Einstellung der Sendewellenlänge des Senders steuert, solange dieser nicht mit einer geeigneten Wellenlänge sendet.

6. System nach Anspruch 5, **dadurch gekennzeichnet, daß** der Detektor (DEC) ein besonderes Steuersignal zur Einstellschaltung (CC) sendet, solange er kein Signal mit ausreichendem Pegel vom Sender (E1) empfängt.

7. System nach Anspruch 5, **dadurch gekennzeichnet, daß** jede Schaltung einen Umschalter umfaßt, der einen Ausgang und so viele Eingänge besitzt, wie Empfänger vorhanden sind, und ermöglicht, einen Eingang mit einem Ausgang zum Detektor (DEC) zu verbinden.

8. System nach einem der Ansprüche 1 oder 7, **dadurch gekennzeichnet, daß** es einen Demultiplexer (DMX) für Wellenlängen umfaßt, der an den Koppler (CE) angeschlossen ist und die verschiedenen Wellenlängen empfängt, die von den Sendern der verschiedenen Schaltungen (C1 bis C16) gesendet werden, und jede Wellenlänge zu einem besonderen Empfänger (R1 bis R16) lenkt.

9. System nach einem der Ansprüche 7 oder 8, **dadurch gekennzeichnet, daß** jede Schaltung (C1 bis C16) auf einer Karte verwirklicht ist, wobei die verschiedenen Karten in einen Verbinder (CO) gesteckt sind, der an die Schaltung eine Adresseninformation liefert, und daß der Verbinder (CO), der Demultiplexer (DMX), die Empfänger (R1 bis R16), der Umschalter (SW), der Detektor (DEC), die Einstellschaltung (CC) und der Sender (Ei) auf den verschiedenen Karten jeweils gleiche Plätze einnehmen.

**Claims**

1. Optical interconnection system comprising:

- a specified number (N) of circuits (C1 to C16) to be interconnected, each circuit being made on a card and comprising an optical transmitter (E1 to E16) and at least one optical receiver (R1, R16), the transmitter of a card transmitting at an optical wavelength specific to this circuit;
- an optical coupler (CE) connecting the transmitter of each circuit to all receivers of the other circuits;

**characterized in that** each card (C1 to C16) possesses an address tag which identifies it, the value of this address tag being applied to the transmitter of the card so as to adjust the optical wavelength of transmission of the transmitter, the address tag being supplied to a card (C1 to C16) by a device external to this card as a function of the rank of this card in the assembly of circuits to be interconnected.

2. System according to Claim 1, **characterized in that** each circuit to be interconnected is made on a card, each card being plugged into at least one connector (CO), the address tag of a circuit being supplied to it by this connector.

3. System according to Claim 2, **characterized in that** the address tag is contained in this connector.

4. System according to Claim 2, **characterized in that** the connector is wired in such a way as to match an address tag supplied by an external circuit to the card which is connected to it.

5. System according to Claim 1, **characterized in that** it comprises in each specified circuit (C1 for example):

   - as many receivers (R1, R16) as there are circuits, each receiver being effective in respect of the transmission wavelength of a single circuit and supplying a current to the reception of this wavelength;
   - a switch (SW) connecting under the control of the address tag, the receiver (R1) which is effective at the wavelength transmitted by the transmitter (E1) of the same specified circuit (C1 according to the example taken), to an electrical current detector (DEC) which controls a circuit (CC) for adjusting the wavelength of transmission of the transmitter while the latter is not transmitting at an appropriate wavelength.

6. System according to Claim 5, **characterized in that** the detector (DEC) transmits a particular control signal to the adjusting circuit (CC) while it is not receiving a signal of sufficient level from the transmitter (E1).

7. System according to Claim 5, **characterized in that** each circuit comprises a switch possessing an output and as many inputs as there are receivers and making it possible to connect an input to an output towards the detector (DEC).

8. System according to one of Claims 1 and 7,
   **characterized in that** it comprises a wavelength demultiplexer (DMX) connected to the coupler (CE), receiving the various wavelengths transmitted by the transmitters of the various circuits (C1 to C16) and routing each wavelength to a particular receiver (R1 to R16).

9. System according to one of Claims 7 and 8, **characterized in that** each circuit (C1 to C16) is made on a card, the various cards being plugged into a connector (CO) which supplies the address tag to the circuit and **in that** the connector (CO), the demultiplexer (DMX), the receivers (R1 to R16), the switch (SW), the detector (DEC), the adjusting circuit (CC), the transmitter (Ei) occupy identical locations on various cards.

● connecteurs optiques
de fond de panier

# FIG.1

FIG.2